# EUROPÄISCHE PATENTSCHRIFT

(11) **EP 1 451 289 B1**
(45) Veröffentlichungstag und Bekanntmachung des Hinweises auf die Patenterteilung: **07.05.2008**
(21) Anmeldenummer: 02792642.7
(22) Anmeldetag: 04.12.2002
(51) Int. Cl.: C12M 1/34

(54) **BAUEINHEIT ZUR OPTISCHEN BELEUCHTUNG EINER VIELZAHL VON PROBEN**
ASSEMBLY FOR THE OPTICAL ILLUMINATION OF A PLURALITY OF SAMPLES
BLOC DE COMPOSANTS POUR L'ECLAIRAGE OPTIQUE D'UNE PLURALITE D'ECHANTILLONS

(30) Priorität: 05.12.2001 DE 10160987
(43) Veröffentlichungstag der Anmeldung: 01.09.2004
(73) Patentinhaber: SIEMENS AKTIENGESELLSCHAFT, 80333 München (DE)
(72) Erfinder: KRETSCHMER, Hans-Richard, 10999 Berlin (DE)
(86) Internationale Anmeldenummer: PCT/DE2002/004491
(87) Internationale Veröffentlichungsnummer: WO 2003/050315

(56) Entgegenhaltungen:
- DE-A- 19 858 490
- DE-A- 19 929 875
- DE-A- 19 940 752
- US-A- 4 659 429

## Beschreibung

Die Erfindung betrifft eine Baueinheit zur simultanen, optischen Beleuchtung einer Vielzahl von Proben mittels einer Lichtquelle, die aus leuchtfähigen porösen Silizium besteht.

Eine derartige Baueinheit ist beispielsweise aus der deutschen Patentanmeldung DE 198 58 490 A1 bekannt. Gemäß diesem Dokument ist eine Baueinheit zur simultanen, optischen Beleuchtung einer Vielzahl von jeweilige Proben bildenden, biologischen Zellen mittels einer Lichtquelle aus leuchtfähigem porösen Silizium beschrieben. Dieses leuchtfähige poröse Silizium ist Teil einer als Nanoquellen-Array bezeichneten Leuchtscheibe, welche zur Fixierung der Zellen eine biokompatible Adhäsionsschicht aufweist. Das Nanoquellen-Array ist durch eine Vielzahl sogenannter Aperturen in der Leuchtscheibe gebildet, die mit dem leuchtfähigen porösen Silizium teilweise ausgefüllt sind. Dabei bildet das leuchtfähige poröse Silizium mit der restlichen Leuchtscheibe eine Oberfläche und grenzt damit direkt an die biokompatible Adhäsionsschicht an.

Eine ähnliche Baueinheit zur Beleuchtung von Proben ist beispielsweise aus der deutschen Patentanmeldung DE 199 40 752 A1 bekannt. Gemäß Figur 4 dieses Dokumentes besteht diese Baueinheit aus einem Probenträger, zum Beispiel einem Bio-Chip, und einem sog. Systemmodul, welches alle notwendigen Bauelemente zur Be- oder Durchleuchtung eines auf dem Probenträger angeordneten Arrays von Proben enthält. Die Baueinheit kann mit einem weiteren Systemmodul zur optischen Auswertung der vom Probenträger ausgesandten Messsignale in Verbindung gebracht werden.

Das erstgenannte Systemmodul zur Erzeugung des Lichtfelds weist eine Matrixanordnung aus Lichtquellen auf, welche zum Beispiel durch ein Mikrolaserarray oder Mikrodiodenarray gebildet sein können. Durch Zusammenschluss dieser Vielzahl von Mikrolichtquellen wird erreicht, dass auf dem Probenträger eine Lichtmatrix mit Lichtpunkten gleichmäßiger Intensität zur optischen Untersuchung der einzelnen Proben erzeugt werden kann.

Aufgabe der Erfindung ist es, eine Baueinheit zur gleichmäßigen optischen Beleuchtung von Probenarrays zur Verfügung zu stellen, bei der das Probenarray auf einer vergleichsweise geringen Fläche untergebracht werden kann.

Erfindungsgemäß sind auf dem leuchtfähigen, porösen Silizium Teilchen zur Anlagerung der mit Fluoreszenzmakern versehenen Bestandteile der Proben immobilisiert. Die Teilchen zur Anlagerung von den Bestandteilen der Proben können aus Proteinen, kleineren Molekülen, Nukleinsäuren oder auch deren Bestandteilen, den Oligonukleotiden bestehen. Der Vorgang der Immobilisierung bewirkt, dass diese Teilchen fest mit dem Probenträger verbunden werden, um später die nachzuweisenden Bestandteile der Proben an sich zu binden.

Das poröse Silizium, welches als Lichtquelle dient, eignet sich aufgrund der schwammartigen Struktur besonders gut zur Immobilisierung der Teilchen. Dies lässt sich dadurch erklären, dass die schwammartige Struktur eine große innere Oberfläche zur Anlagerung der Teilchen während der Immobilisierung zur Verfügung stellt. Dadurch kann pro Flächeneinheit des Probenträgers eine große Anzahl von Teilchen immobilisiert werden, da die innere Oberfläche des porösen Silizium eine hohe Dichte der angelagerten Teilchen zulässt. Dies begünstigt vorteilhaft die fortschreitende Miniaturisierung der Proben, da auf kleinstem Raum eine genügende Menge von nachzuweisenden Bestandteilen der Proben an die immobilisierten Teilchen angelagert werden können, um die durch die Empfindlichkeit der verwendeten Analyseeinrichtung gegebene Nachweisgrenze zu erreichen.

Die nachzuweisenden Bestandteile der Proben können aus Molekülen, Proteinen, Nukleinsäuren oder auch deren Bestandteilen, den Oligonukleotiden bestehen. Letztere werden beispielsweise an geeignete Teilchen auf dem Probenträger angelagert. Dieser Vorgang wird als Hybridisierung bezeichnet. Nur ergänzend sei in diesem Zusammenhang bemerkt, dass zum Nachweis der nachzuweisenden Bestandteile der Proben diese mit sogenannten Fluoreszenzmarkern versehen sind. Letztere enthalten eine Substanz, welche mittels der Lichtquelle zur Fluoreszenz angeregt werden kann. Die Fluoreszenz kann durch das Gerät zur optischen Untersuchung registriert werden und lässt dadurch einen Rückschluss auf das Vorhandensein bestimmter Bestandteile in den Proben zu, die aufgrund jeweils spezifischer Eigenschaften an die immobilisierten Teilchen angelagert worden sind.

Es ist vorgesehen, dass die Lichtquelle aus leuchtfähigem porösen Silizium besteht. Dieses poröse Silizium kann vorteilhaft in einfacher Weise hergestellt werden, indem ein Substrat aus n- oder p-dotiertem Silizium mit Flusssäure behandelt wird (vgl. V. Lehmann, Porous Silicon - A New Material For MEMS, vorgetragen auf dem "Proceedings of the IEEE Micro Electro Mechanical Systems Work Shop" in San Diego, Californien 11. - 15.2.1996, veröffentlicht im zugehörigen Programm auf den Seiten 1 bis 6). Das so erhaltene poröse Silizium kann durch Anlegen einer elektrischen Spannung zum Leuchten gebracht werden und so als Lichtquelle für die Proben verwendet werden. Hierdurch entsteht eine Lichtquelle mit einer Abstrahlungsfläche, wobei diese Lichtquelle außerordentlich kompakt im Aufbau ist. Das Leuchtmittel dieser Lichtquelle, nämlich das poröse Silizium, lässt sich außerordentlich einfach durch eine Ätzbehandlung herstellen, wodurch sich die Fertigungskosten vorteilhaft reduzieren lassen.

Gemäß einer vorteilhaften Weiterbildung der Erfindung bildet das poröse Silizium die Oberfläche einer Leuchtscheibe. Es wird also eine Lichtquelle verwendet, welche das Licht ausgehend von einer Fläche, nämlich der Oberfläche der Leuchtscheibe, abstrahlt. Die Abstrahlungsfläche sendet Licht von einheitlicher Intensität aus, so dass die Proben gleichmäßig beleuchtet werden.

Günstig ist es, wenn die Leuchtscheibe an ihrer Oberfläche Leuchtzonen aus dem leuchtfähigen porösen Silizium aufweist. Jeder Leuchtzone kann genau eine Probe zugeordnet sein, wodurch sich besonders vorteilhaft das Potential für eine Miniaturisierung der Lichtquelle ausschöpfen lässt, da die Leuchtzonen unter Anwendung entsprechender Abdeckmasken durch Ätzen in höchster Genauigkeit in die Oberfläche des Siliziumsubstrates eingebracht werden können. Dabei kann auf bewährte Techniken zurückgegriffen werden, wie sie bei der Herstellung von Leiterplatten durch Ätzen allgemein bekannt sind. Die Herstellung von einzelnen Leuchtzonen hat den großen Vorteil, dass diese jeweils das Licht für genau eine Probe produzieren, während zwischen den Proben kein Licht erzeugt wird. Damit kann eine auftretende Streustrahlung auf ein Minimum reduziert werden. Dies wirkt sich wiederum während des Messvorganges positiv auf das Signal-Rauschverhältnis aus, wodurch sich das Messergebnis zuverlässiger feststellen lässt. Insbesondere kann dadurch auch die Größe der Proben weiter verringert werden, da die daraus resultierenden Messsignale mit geringerer Intensität ohne Abstriche an die Zuverlässigkeit des Messergebnisses aufgenommen werden können.

Weitere Einzelheiten der Erfindung lassen sich der Zeichnung entnehmen. Hierbei zeigen
- Figur 1: allgemein ein stark schematisiertes Gerät zur simultanen, optischen Untersuchung von mehreren Proben auf einer Mikrotiterplatte mit einer Lichtquelle aus leuchtfähigem, porösen Silizium,
- Figur 2: den Ausschnitt einer Mikrotiterplatte, die durch eine Lichtquelle aus porösen Silizium durchleuchtet werden kann und
- Figur 3: ein Ausführungsbeispiel der erfindungsgemäßen Baueinheit mit einer Lichtquelle mit Leuchtzonen, die durch poröses Silizium gebildet werden und gleichzeitig den Probenträger bilden.

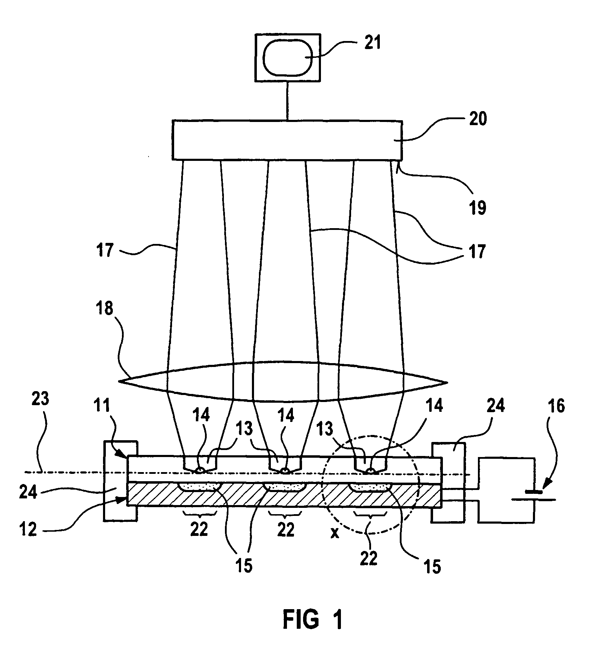

Ein Gerät zur simultanen, optischen Untersuchung von Proben gemäß Figur 1 weist im Allgemeinen einen Probenträger auf, der durch eine Mikrotiterplatte 11 gebildet ist. Dieser ist mit einer Leuchtscheibe 12 verbunden, welche beispielsweise poröses Silizium zur Beleuchtung von Vertiefungen 13 zur Aufnahme von Proben 14 in der Mikrotiterplatte aufweist.

Wird das poröse Silizium 15 über eine Spannungsversorgung 16 zum Leuchten gebracht, so entsteht pro Vertiefung ein schematisch angedeuteter Strahlengang 17, der ausgehend vom porösen Silizium 15 durch die jeweilige Vertiefung 13 in der transparenten Mikrotiterplatte hindurch über eine Optik 18 (in Figur 1 durch eine einzelne Sammellinse angedeutet) auf eine lichtempfindliche Fläche 19 geleitet wird.

Die lichtempfindliche Fläche 19 ist Bestandteil einer CCD-Kamera 20, welche zur Auswertung des Messergebnisses ein Ausgangssignal erzeugt, welches beispielsweise an einen Bildschirm 21 als Ausgabeeinrichtung weitergegeben wird.

Das poröse Silizium 15 weist eine Abstrahlungsfläche 22 auf, welche sich aus mehreren Einzelflächen zusammensetzt und die parallel zur Mikrotiterplatte 11 angeordnet ist. Die Proben 14 sind auf der Mikrotiterplatte flächig in einer Untersuchungsebene 23 angeordnet. Hierdurch ist gewährleistet, dass die Proben 14 durch einen gleichmäßigen Abstand zum porösen Silizium 15 mit gleichmäßiger Lichtintensität durchleuchtet werden, wodurch ein zuverlässiges Messergebnis durch die CCD-Kamera 20 aufgenommen werden kann.

Die Miktrotiterplatte 11 und die Leuchtscheibe 12 bilden eine Baueinheit, welche mittels einer schematisch dargestellten Einspannung 24 in dem Gerät gehalten wird. Die Einspannung 24 ermöglicht ein unproblematisches Auswechseln der Baueinheit, wobei die Mikrotiterplatte lösbar mit der Leuchtscheibe verbunden ist. Auf diese Weise können mit derselben Leuchtscheibe verschiedene Mikrotiterplatten untersucht werden.

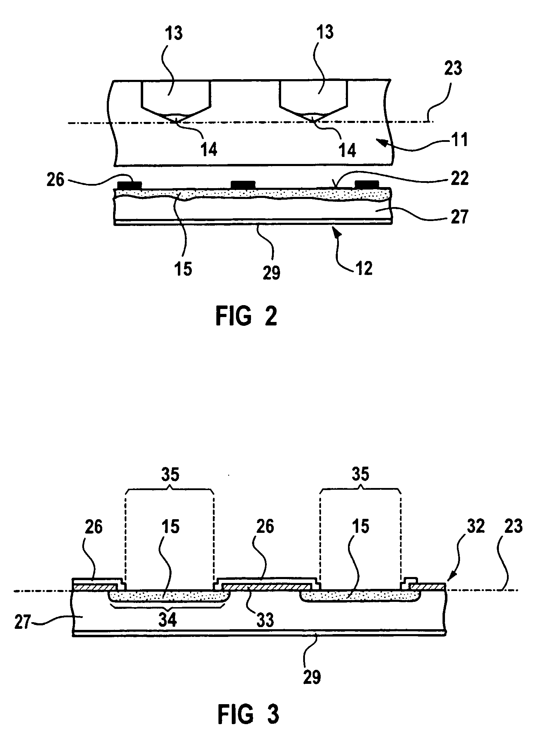

Figur 1 stellt exemplarisch den Aufbau des Gerätes für eine Durchleuchtung der Proben 14 dar. Selbstverständlich lässt sich die erfindungsgemäße Baueinheit auch in andere bekannte Anordnungen solcher Geräte integrieren, wie diese beispielsweise in den Figuren 2 und 3 der deutschen Patentanmeldung DE 199 40 752 A1 dargestellt sind. Demgemäß kann im Strahlengang 17 zwischen Optik 18 und der lichtempfindlichen Fläche 19 beispielsweise ein halbdurchlässiger Spiegel im Winkel von 45° zum Strahlengang angeordnet werden, so dass durch eine seitliche Anordnung der Leuchtscheibe die Proben aus derselben Richtung beleuchtet werden können, in die das Licht zur Detektion durch die lichtempfindliche Fläche 19 abgegeben wird (diese Anordnung ist nicht näher dargestellt).

Die folgenden Figuren stellen Ausschnitte aus Probenträgern bzw. Lichtquellen dar, wie sie in ihrer Darstellung dem Detail X gemäß Figur 1 entsprechen. Soweit die Ausgestaltungen gemäß der Figuren 1 bis 3 gleichartige Bauteile aufweisen, sind diese durch die gleichen Bezugszeichen gekennzeichnet und werden im einzelnen nicht näher erläutert.

Gemäß Figur 2 ist eine Baueinheit dargestellt, bei dem die Mikrotiterplatte 11 von der Leuchtscheibe 12 getrennt ist. Das poröse Silizium 15 der Leuchtscheibe ist mit einem Netz von Leiterbahnen 26 versehen, während auf der gegenüberliegenden Seite der Leuchtscheibe 12, gebildet durch ein Siliziumsubstrat 27, eine leitfähige Schicht 29 angebracht ist. Durch eine Kontaktierung der leitfähigen Schicht 29 und der Leiterbahn 26 mit einer Spannungsquelle (nicht dargestellt) kann das poröse Silizium 15 zum Leuchten gebracht werden, wodurch dieses ausgehend von der Abstrahlungsfläche 22 die Proben 14 durchleuchtet.

Erfindungsgemäß kann die Leuchtscheibe gemäß Figur 2 auch verwendet werden, um direkt auf das leuchtfähige poröse Silizium die Proben aufzubringen (nicht dargestellt). Dabei werden Teilchen zur Anlagerung der mit den Fluoreszenzmarkern versehenen Bestandteile der Proben direkt auf der Oberfläche der Leuchtscheibe immobilisiert. Dies kann in diskreten Bereichen erfolgen, die als Spots bezeichnet werden. Im Bereich dieser Spots können die nachzuweisenden Probenbestandteile an die Teilchen beispielsweise durch eine Hybridisierungsreaktion angelagert werden.

Ein anderes Ausführungsbeispiel, bei dem die durch poröses Silizium 30 gebildete Lichtquelle und der Probenträger in ein Bauteil integriert sind, ist in Figur 3 dargestellt. Der Probenträger ist als Biochip 32 ausgebildet, wobei das Siliziumsubstrat 27 den Grundkörper bildet. An der Unterseite befindet sich die elektrisch leitende Schicht 29, während die Oberseite mit einer Ätzstopschicht 33 beschichtet ist, die im Bereich sogenannter Spots 34 Aussparungen aufweist. Im Bereich dieser Spots kann mittels einer Ätzbehandlung daher das Siliziumsubstrat 27 in poröses Silizium 15 umgewandelt werden. Hierdurch entstehen im Bereich der Spots Leuchtzonen 35, deren Gesamtheit die Leuchtfläche des Biochips ergeben.

Auf den Spots können beispielsweise Oligonukleotide immobilisiert werden, die zur Hybridisierung der nachzuweisenden Oligonukleotide in der Probe geeignet sind (aufgrund der Größenverhältnisse in Figur 4 nicht dargestellt).

Damit fällt die Abstrahlungsfläche 22 des porösen Siliziums mit der Probenebene 23 in diesem Ausführungsbeispiel zusammen, wodurch eine besonders wirksame Aktivierung von Fluoreszenzfarbstoffen in den nachzuweisenden Bestandteilen der Probe erfolgen kann. Außerdem ist eine Abstrahlung des Lichtes auf die Leuchtzonen 35 beschränkt, so dass die Entstehung von Streustrahlung auf ein Minimum beschränkt werden kann, da die Bereiche auf dem Probenträger, die nicht durch die Spots 34 belegt sind, dunkel bleiben.

Die Aktivierung der Leuchtzonen erfolgt, ähnlich wie zu Figur 2 erläutert, durch die Schicht 29 und die Leiterbahnen 26, welche die Leuchtzonen 35 an deren Rand ringförmig umgeben.

## Patentansprüche

1. Baueinheit zur simultanen, optischen Beleuchtung einer Vielzahl von Proben (14) mittels einer Lichtquelle, die aus leuchtfähigem porösen Silizium (15) besteht,
**dadurch gekennzeichnet,**
**dass** auf dem leuchtfähigen, porösen Silizium (15) Teilchen zur Anlagerung der mit Fluoreszenzmarkern versehenen Bestandteile der Proben immobilisiert sind.

2. Baueinheit nach Anspruch 1,
**dadurch gekennzeichnet,**
**dass** das poröse Silizium die Oberfläche einer Leuchtscheibe (12) bildet.

3. Baueinheit nach Anspruch 2,
**dadurch gekennzeichnet,**
**dass** die Leuchtscheibe (12) an ihrer Oberfläche Leuchtzonen (35) aus dem leuchtfähigen, porösen Silizium aufweist.

4. Baueinheit nach Anspruch 3,
**dadurch gekennzeichnet,**
**dass** jeder Leuchtzone (35) genau eine Probe (14) zugeordnet ist.

## Claims

1. Assembly for the simultaneous optical illumination of a multiplicity of samples (14) by means of a light source which consists of luminescent porous silicon (15), **characterized in that** particles for accumulating the samples' constituents provided with fluorescent labels are immobilized on the luminescent porous silicon (15).

2. Assembly according to claim 1, **characterized in that** the porous silicon forms the surface of a luminous disk (12).

3. Assembly according to claim 2, **characterized in that** the luminous disk (12) has luminous zones (35) made of the luminescent porous silicon on its surface.

4. Assembly according to claim 3, **characterized in that** each luminous zone (35) is assigned just one sample (14).

## Revendications

1. Bloc de composants pour l'éclairage optique simultané d'une pluralité d'échantillons (14) au moyen d'une source de lumière constituée de silicium (15) poreux et susceptible de luminescence,
**caractérisé**
**en ce que** des particules pour l'incrustation des constituants des échantillons munis de marqueurs de fluorescence sont immobilisées sur du silicium (15) poreux et susceptible de luminescence.

2. Bloc de composants suivant la revendication 1,
**caractérisé**
**en ce que** le silicium poreux forme la surface d'un disque (12) luminescent.

3. Bloc de composants suivant la revendication 2,
**caractérisé**
**en ce que** le disque (12) luminescent a, sur sa surface, des zones (35) luminescentes en le silicium poreux et susceptible de luminescence.

4. Bloc de composants suivant la revendication 3,
**caractérisé**
**en ce qu'**un échantillon (14) est associé exactement à chaque zone (35) luminescente.
